Europäisches Patentamt

(19) European Patent Office

Office européen des brevets

(11) Numéro de publication : **0 238 425 B1**

(12) **FASCICULE DE BREVET EUROPEEN**

(45) Date de publication du fascicule du brevet :
**14.08.91 Bulletin 91/33**

(51) Int. Cl.$^5$ : **B22F 9/08, B22F 9/10,**
**B22D 21/06, B22D 23/06,**
**C01B 31/34, H05B 6/22**

(21) Numéro de dépôt : **87420067.8**

(22) Date de dépôt : **10.03.87**

(54) Procédé et dispositif pour l'élaboration de matériaux réfractaires par induction.

(30) Priorité : **13.03.86 FR 8604119**

(43) Date de publication de la demande :
**23.09.87 Bulletin 87/39**

(45) Mention de la délivrance du brevet :
**14.08.91 Bulletin 91/33**

(84) Etats contractants désignés :
**AT BE CH DE ES FR GB GR IT LI LU NL SE**

(56) Documents cités :
**DE-A- 2 144 040**
**DE-C- 516 656**
**FR-A- 2 036 418**
**US-A- 1 839 518**
**US-A- 2 595 780**
**E. KLAR: "Metals handbook", 9ième édition,**
**vol. 7, "Powder metallurgy", pages 73-75,**
**American Society for Metals, Metals Park,**
**Ohio, US**

(73) Titulaire : **TECHNOGENIA S.A.**
**Zone Artisanale des Marais**
**F-74410 Saint Jorioz (FR)**

(72) Inventeur : **Brunet, Pierre**
**Montbenoit**
**F-73250 Saint Pierre d'Albigny (FR)**
Inventeur : **Esnault, Fortunat**
**26, cours de la Libération**
**F-38000 Grenoble (FR)**
Inventeur : **Maybon, Guy**
**Le Noiret**
**F-74410 Saint Jorioz (FR)**
Inventeur : **Perrier de la Bathie, René**
-
**F-73250 Saint Pierre d'Albigny (FR)**

(74) Mandataire : **de Beaumont, Michel**
**Cabinet Poncet 7, chemin de Tillier B.P. 317**
**F-74008 Annecy Cédex (FR)**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

**Description**

La présente invention concerne les matériaux réfractaires qui jusqu'ici ne pouvaient être fondus sans attaquer ou fondre le récipient qui les contenait. C'est le cas des métaux comme le tungstène (fusion à 3.400°C), le molybdène (fusion à 2.600°C), ou d'oxydes réfractaires et de matériaux de synthèse (siliciures, carbures ...).

A ce jour les matériaux réfractaires de synthèse solides (à l'état non pulvérulent) sont obtenus soit par frittage, soit par fusion en creuset consommable.

Le frittage consiste généralement à agglomérer des poudres, chauffer les pièces agglomérées pour établir des "ponts de frittage" entre les particules de matériau. Dans le cas des métaux, on peut ensuite marteler, laminer à chaud jusqu'à l'obtention de pièces massives possédant la densité théorique du métal. C'est la technique utilisée pour l'obtention de pièces en tungstène ou en molybdène.

Une autre technique de frittage est utilisée pour la production de cermets. C'est le frittage en phase liquide. Cette technique est utilisée pour la fabrication de pièces en carbure de tungstène. Les carbures réfractaires pulvérulents (WC, TiC, TaC) sont mélangés à de la poudre de cobalt. Les mélanges sont comprimés, chauffés jusqu'à la température de fusion du cobalt. Après refroidissement les carbures sont liés par un film de cobalt ductile et tenace.

La fabrication de carbure de tungstène fondu pratiquée jusqu'à ce jour constitue le type de fusion en "creuset chaud". Elle s'effectue de la façon suivante: on introduit un mélange pulvérulent de carbone et de tungstène dans un creuset en graphite. On chauffe les parois de ce creuset par induction en le soumettant à l'action d'un champ magnétique à haute fréquence, ou par un autre procédé de chauffage. Le creuset est alors lui-même porté à une température élevée, et ses parois élèvent la température du mélange de poudres par conduction thermique. Le mélange de poudres atteint, par conduction, la température de fusion. Cette température est voisine de 2.750°C. Cela nécessite un bon isolement extérieur du creuset, dont les parois doivent être portées à une température encore supérieure.

Ce procédé présente de nombreux inconvénients, notamment :

– on contrôle mal la quantité de carbone de l'alliage obtenu car une partie du graphite du creuset passe dans l'alliage ; et à cause de cela le creuset est progressivement consommé.

– on peut difficilement envisager une production en continu, en raison du mode de chauffage, et, en raison du chauffage du creuset lui-même.

L'expérience montre que la fusion d'un matériau tel que du carbure de tungstène en creuset chaud nécessite une décharge très rapide du matériau hors du creuset après fusion, pour obtenir une structure satisfaisante (voir US-A-1 839 518). Cela est incompatible avec un processus continu. Le maintien en effet pendant une durée suffisante d'une masse liquide de carbure de tungstène fondu dans un creuset graphite entraîne une augmentation progressive de la teneur en carbone du carbure de tungstène. Cette augmentation entraîne une augmentation de la température de fusion. En conséquence le maintien du contenu d'un creuset pendant le temps nécessaire à un écoulement régulier peu important pour réaliser une pulvérisation dans de bonnes conditions est très difficilement réalisable.

Par ailleurs on connait les techniques de chauffage par induction dans un "creuset froid", techniques dans lesquelles on chauffe directement une pièce solide en la soumettant directement à l'action d'un champ magnétique alternatif. On entend par "creuset froid" un creuset dans lequel les parois sont conçues pour transmettre et concentrer le champ magnétique sans subir elles-mêmes un échauffement important par courants induits. Un tel type de "creuset froid" est décrit notamment dans le brevet FR-A-2 036 418. Cependant il est apparu difficile de chauffer et a fortiori de fondre directement des mélanges pulvérulents réfractaires dans un tel "creuset froid". En effet, les calculs montrent que pour une granulométrie de quelques dixièmes de millimètre, pour la poudre de tungstène par exemple, il faut utiliser une fréquence de champ magnétique supérieure à 1 MHz. Il est difficile de produire des puissances suffisantes à cette fréquence dont l'usage est par ailleurs susceptible de brouiller les ondes radio. Une telle solution n'apparaît donc pas directement applicable dans l'industrie.

Le document DE-C-516 656 décrit un procédé de fusion de carbure de tungstène ou de tungstène en poudre, dans lequel le matériau réfractaire en poudre compactée est introduit dans un creuset en graphite, le creuset contenant le matériau étant ensuite introduit dans un four pour être chauffé par conduction jusqu'à une température supérieure à la température de fusion du matériau. Le matériau fondu s'écoule par un canal de fonderie jusque dans une lingotière graphite. Cette technique ne permet pas une coulée continue, et ne permet pas un contrôle précis de quantité de carbone introduite dans le carbure.

Le document US-A-2 595 780 enseigne de fondre un lingot de germanium dans un creuset en graphite, par induction, en présence d'un gaz sous pression provoquant l'expulsion du matériau fondu par un petit orifice inférieur. Le matériau à fondre, sous forme de lingot, est ainsi entièrement entouré par le dispositif, et ce dispositif doit être démonté pour introduction d'un autre lingot pour poursuivre la fusion. Une telle technique ne permet pas un processus de coulée en continu, et ne résoud pas non plus le problème de passage du carbone du creuset dans le matériau fondu.

Le document DE-A-2 144 040 enseigne de refroidir un écoulement de matériau liquide par un rouleau rotatif à rotation lente (10 à 50 tours/minute) refroidi par de l'eau ou un fluide de refroidissement. L'utilisation d'un tel dispositif s'avère incompatible avec la fusion d'un matériau réfractaire, ledit matériau provoquant de façon certaine la détérioration quasi immédiate du rouleau.

La présente invention a notamment pour objet d'éviter les inconvénients des procédés et des dispositifs connus, en proposant des moyens pour chauffer directement le mélange de poudres réfractaires par induction magnétique.

Selon l'invention, il est possible de réaliser cette fusion dans un "creuset froid", de sorte que le matériau du creuset, étant à une température relativement basse, ne se combine pas, même en faible proportion, aux matériaux formant le mélange à fondre. On maîtrise ainsi entièrement la composition et les proportions de l'alliage obtenu.

Selon l'invention on réalise une économie sensible dans la mise en oeuvre de la fusion des matériaux réfractaires.

Selon un autre objet, l'invention permet de concevoir un procédé continu de fusion.

L'invention permet d'obtenir directement un produit divisé, aux formes arrondies ce qui procure des avantages économiques et techniques.

Pour atteindre ces objets ainsi que d'autres, l'invention prévoit un procédé pour réaliser des éléments en matériau réfractaire par fusion à partir de poudre de matériau réfractaire, dans lequel le matériau réfractaire sous forme de poudre compactée est introduit dans un creuset par une ouverture supérieure et est chauffé dans le creuset jusqu'à une température supérieure à sa température de fusion, le matériau fondu s'écoulant par un orifice inférieur ménagé dans le fond du creuset, caractérisé en ce que, pour l'étape de fusion :

– le creuset est un "creuset froid", dont les parois en cuivre sont telles qu'elles transmettent et concentrent le champ magnétique sans subir d'échauffement important par courants induits, le creuset étant muni dudit orifice inférieur,

– le matériau en poudre introduit dans le "creuset froid" est sous forme compactée autoportable,

– le matériau en poudre introduit dans le "creuset froid" est de section plus grande que la section de l'orifice inférieur du creuset,

– le matériau en poudre introduit dans le "creuset froid" est sous forme compactée présentant une résistivité électrique inférieure à une résistivité maximale prédéterminée, la résistivité maximale étant telle que, à la fréquence utilisée pour le chauffage du matériau par induction, l'épaisseur de peau dans le matériau est égale à la moitié du rayon moyen des morceaux de matériau,

– le matériau est chauffé directement par induction dans le "creuset froid",

– on laisse en permanence s'écouler le matériau fondu par l'orifice inférieur.

Dans la description qui suit, et dans les revendications, on entend par compactage une agglomération des grains de matériau par pression permettant d'obtenir une forme autoportable et une conductivité électrique suffisante notamment par rapprochement des grains.

Selon les applications, le libellé "poudre de matériau" désigne soit une poudre du métal réfractaire pour l'obtention d'un élément de métal pur, soit un mélange de poudres de matériaux réfractaires différents pour réaliser la synthèse d'un alliage ou d'une combinaison.

Le terme "autoportable" signifie que l'élément en matériau compacté ne tend pas à se diviser lorsqu'on le porte ; par exemple on peut soulever un élément en forme de morceau ou de barreau par une extrémité et le transporter sans provoquer sa rupture.

Le procédé peut être rendu continu en utilisant un "creuset froid" de forme particulière, comportant un fond percé d'un orifice au travers duquel on laisse en permanence s'écouler le métal fondu ; le matériau à fondre est introduit par l'ouverture supérieure du creuset. Il est chauffé progressivement par induction lors de son transfert de haut en bas du creuset. Le caractère continu du procédé facilite et accélère considérablement la fusion, par le fait qu'une partie du matériau fondu est en contact avec une partie non encore fondue, le matériau fondu étant plus récepteur de l'énergie magnétique et tendant à accélérer par conduction l'échauffement de la partie adjacente non encore fondue du matériau.

Le caractère continu du procédé permet en outre, en sortie de creuset, de diviser le flux du matériau en fusion et d'intervenir sur la forme des particules obtenues.

Selon les caractéristiques physiques des matériaux à fondre, le compactage doit être assuré par différentes méthodes.

Dans le cas de matériaux s'agglomérant facilement par pression, par exemple pour de la poudre de tungstène pure et très fine, on compacte le matériau par compression à froid, sous une pression de 100 à 500 bars, pour lui donner la forme compacte et autoportable désirée.

Toutefois, un tel procédé de compactage par simple compression à froid ne convient pas pour un mélange de carbone et de tungstène. On peut alors utiliser une opération ultérieure de frittage, en portant le mélange compacté à une température élevée un peu inférieure à la température de fusion du mélange, par exemple une température de 800 à 1000° C.

Selon l'invention, dans les cas où un compactage du matériau seul par compression n'apparaît pas suffisant, on réalise le compactage par application d'une pression sur un mélange des matériaux à fondre avec un liant, le liant étant éventuellement en solution dans un solvant. Après compactage, en cas de présence de solvant, on élimine au moins partiellement ce solvant par séchage.

Selon un mode de réalisation, le compactage est effectué par moulage sous pression d'un mélange de matériau avec le liant en solution dans le solvant.

Selon un mode de réalisation plus adapté à une production en continu, le compactage est réalisé par extrusion avec ou sans fil d'âme d'un mélange de matériau avec le liant en solution dans le solvant. Le matériau du fil d'âme est choisi pour ne présenter aucune incompatibilité avec le mélange extrudé.

Ces objets ainsi que d'autres de la présente invention ressortiront de la description suivante d'exemples particuliers et d'un dispositif décrit en relation avec la figure jointe représentant un creuset froid selon l'invention.

La description qui suit s'applique principalement à la production de carbure de tungstène fondu à partir de poudres de carbone et de tungstène. L'état pulvérulent du carbone et du tungstène favorise l'obtention d'un mélange homogène et donne une réactivité chimique très élevée. Les deux poudres sont mélangées avec un liant organique et un solvant tel que l'eau. La quantité de liant doit être suffisante pour permettre d'extruder le mélange. Cette quantité est normalement comprise entre 0,5 et 2,5 % en poids du mélange. La quantité d'eau est également ajustée en fonction des propriétés nécessaires pour l'extrusion. Elle est généralement de trois à quatre fois la quantité en poids de liant.

La nature du liant affecte directement la conductivité électrique du produit compacté. Le liant influence également le processus de rapprochement des grains et l'obtention du mélange. On a constaté que les liants habituellement utilisés pour l'agglomération avant frittage ne conviennent pas pour la fusion par induction. On utilisera de préférence un liant susceptible de se décomposer à haute température, par exemple par pyrolyse.

De bons résultats ont été obtenus avec les liants polysaccharides, tels que le galactomannose, l'hydroxyéthylméthylcellulose, une carboxylméthylcellulose telle que la carbohexaméthylcellulose, ou un alginate.

L'extrusion s'effectue par exemple sous une pression d'environ 200 bars au moyen d'une extrudeuse connue et, en sortie d'extrusion, le produit se présente sous forme de barreaux compacts et autoportables. Après quelques heures de séchage, la majeure partie de l'eau est évacuée, les barreaux sont rigides et peuvent être manipulés.

Les barreaux sont ensuite préchauffés de manière à évacuer l'eau résiduelle et la plus grande partie du liant organique. Le traitement se fait à une température voisine de 800°C. Pour éviter l'oxydation du mélange carbone/tungstène, on effectue ce traitement dans un four étanche avec circulation de gaz inerte. Le carbone provenant de la décomposition du liant entre pour une très faible part dans la composition du mélange et est pratiquement négligeable.

On constate que, après ce traitement thermique, la conductivité électrique du mélange est sensiblement augmentée, et le barreau peut être directement chauffé par induction électromagnétique.

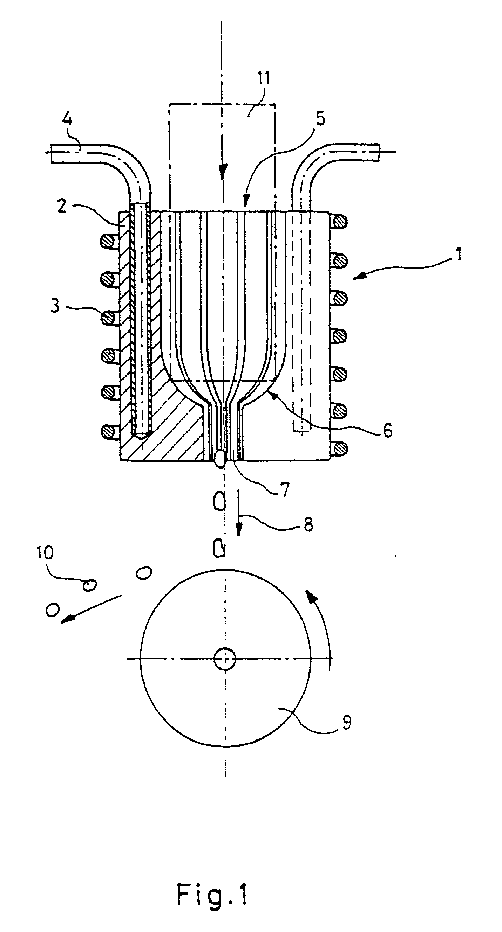

La fusion est effectuée dans un "creuset froid", schématiquement représenté sur la figure 1. Le creuset 1 comprend un cylindre de cuivre 2 d'axe sensiblement vertical, sectionné suivant des plans radiaux et entouré d'un conducteur électrique 3 en forme de bobine coaxiale connecté à un générateur de courants de haute fréquence non représenté sur la figure. Les secteurs du cylindre de cuivre sont refroidis par une circulation de fluide tel que l'eau, dans des canalisations 4. On peut utiliser un creuset présentant une dizaine de secteurs. Le creuset est ouvert vers le haut selon une ouverture supérieure centrale 5 de grand diamètre pour l'introduction des matériaux à fondre. Le fond 6 du creuset est arrondi. De telles formes de creusets sont connues depuis plusieurs années.

Toutefois, selon l'invention, le fond 6 du creuset comporte un orifice inférieur central 7 mettant en communication l'intérieur du creuset avec l'extérieur, et assurant l'écoulement du matériau fondu. On utilise des morceaux ou des barreaux 11 de matériau compacté à fondre dont la section est supérieure à la section de l'orifice inférieur 7, et inférieure à la section de l'ouverture supérieure 5.

Dans le mode de réalisation représenté, on dispose en sortie et au-dessous du creuset un cylindre 9 en cuivre massif entraîné en rotation selon un axe horizontal par des moyens moteurs, et sur la périphérie duquel coule le matériau fondu. Le cylindre 9 divise le flux pour obtenir des éléments fragmentés du matériau aux dimensions et aux formes désirées. La vitesse de rotation du cylindre est avantageusement de 3000 tours par minute environ. On constate que, de manière surprenante, un tel dispositif permet de diviser du carbure de tungstène fondu sans endommager le cylindre, bien que la température du carbure de tungstène fondu soit très supérieure à la température de fusion du cuivre.

En fonctionnement, le barreau 11 du matériau compacté à fondre est engagé dans le creuset par l'ouverture supérieure 5 et vient reposer librement sur le fond 6 du creuset. Par alimentation du conducteur 3 en énergie électrique, le barreau est progressivement chauffé et sa partie inférieure fond et s'écoule par l'orifice 7. On peut avantageusement utiliser des barreaux dont la longueur est nettement supérieure à la profondeur du creuset, pour ne pas avoir à recharger trop souvent en barreaux. On peut d'autre part empiler plusieurs barreaux les uns à la suite des autres pour assurer un processus continu.

En alternative, le procédé procure également des résultats satisfaisants lorsque le matériau à fondre est introduit dans le creuset froid sous forme de morceaux précompactés, simplement entassés dans le creuset.

## Exemple n°1 :

On peut obtenir la coulée en continu d'un mélange de carbure de tungstène de type WC-W$_2$C, c'est-à-dire contenant environ 4 % en poids de carbone. Après extrusion on effectue un préchauffage à environ 800°C. Le creuset utilisé pour la fusion comporte un fond 6 et un orifice de coulée 7 d'environ 10 millimètres de diamètre. La fréquence nécessaire pour obtenir la fusion dans de bonnes conditions est d'environ 250 à 400 KHz. Le débit de matière est voisin de quatre cents grammes par minute pour une puissance de 60 kW.

## Exemple n°2 :

On peut utiliser le procédé pour fondre du tungstène pur. On mélange de la poudre de tungstène à 2 % d'un liant organique, on ajoute 6 % d'eau. Par extrusion à 200 bars on obtient un barreau de tungstène de 20 millimètres de diamètre environ. Les barreaux sont préchauffés quelques minutes à 1000°C dans un four sous atmosphère d'argon pour éliminer complètement le liant. Les barreaux sont ensuite portés à la température de fusion dans le creuset froid. La fréquence utilisée peut être plus basse ; par exemple de bons résultats peuvent être obtenus avec une fréquence de 30 KHz environ.

Dans toutes les applications, on doit assurer un compactage suffisant pour que le barreau ou les morceaux de matière introduits dans le creuset présentent une résistivité électrique convenable. En effet la résistivité doit être telle que les courants électriques induits dans le barreau ou le morceau par le champ magnétique soient suffisamment intenses pour assurer l'échauffement et la fusion du barreau ou du morceau. Ainsi, on considère que la résistivité du matériau compacté, pour être convenable, doit être inférieure à une valeur maximale P prédéterminée. Cette valeur maximale P prédéterminée dépend de plusieurs paramètres. Elle peut être calculée à partir des équations de MAXWELL conduisant à la formule donnant l'épaiseur de peau en fonction de la résistivité du matériau et de la fréquence du champ magnétique. On considère que lorsque la résistivité maximale P est atteinte, l'épaisseur de peau dans le matériau est égale à la moitié du rayon, pour un barreau cylindrique de révolution.

La formule permettant de calculer la valeur maximale P prédéterminée est, dans ce cas :

$$\frac{500 \sqrt{P}}{\sqrt{F}} = \frac{R}{2}$$

P étant la résistivité maximale en ohm.mètre,
500 étant une valeur contenant la perméabilité magnétique,
F la fréquence en Hz utilisée pour le chauffage par induction,
R le rayon du barreau ou le rayon moyen du morceau, en mètres.

La présente invention n'est pas limitée aux modes de réalisation qui ont été explicitement décrits, mais elle en inclut les diverses variantes et généralisations contenues dans le domaine des revendications ci-après.

## Revendications

1. Procédé pour réaliser des éléments en matériau réfractaire par fusion à partir de poudre de matériau réfractaire, dans lequel le matériau réfractaire sous forme de poudre compactée est introduit dans un creuset (1) par une ouverture supérieure (5) et est chauffé dans le creuset (1) jusqu'à une température supérieure à sa température de fusion, le matériau fondu s'écoulant par un orifice inférieur (7) ménagé dans le fond (6) du creuset, caractérisé en ce que, pour l'étape de fusion :
   - le creuset est un "creuset froid", dont les parois en cuivre sont telles qu'elles transmettent et concentrent le champ magnétique sans subir d'échauffement important par courants induits, le creuset étant muni dudit orifice inférieur (7),
   - le matériau en poudre introduit dans le "creuset froid" est sous forme compactée autoportable,
   - le matériau en poudre introduit dans le "creuset froid" est de section plus grande que la section de l'orifice inférieur du creuset,
   - le matériau en poudre introduit dans le "creuset froid" est sous forme compactée présentant une résistivité électrique inférieure à une résistivité maximale (P) prédéterminée, la résistivité maximale (P) étant telle que, à la fréquence utilisée pour le chauffage du matériau par induction, l'épaisseur de peau dans le matériau est égale à la moitié du rayon moyen des morceaux de matériau,
   - le matériau est chauffé directement par induction dans le "creuset froid",
   - on laisse en permanence s'écouler le matériau fondu par l'orifice inférieur (7).

2. Procédé selon la revendication 1, caractérisé en ce que :
   - le matériau compacté est sous forme de morceaux de section plus grande que la section de l'orifice inférieur (7) du creuset,
   - le matériau compacté en morceaux repose librement sur le fond du creuset pendant l'opération de fusion,
   - le fond (6) du creuset est une paroi épaisse à face intérieure arrondie et concave, avantageusement sensiblement sphérique.

3. Procédé selon l'une des revendications 1 ou 2, caractérisé en ce qu'en sortie de l'orifice inférieur (7) on divise le flux de matériau fondu en le faisant tomber sur un cylindre rotatif en cuivre massif en rotation pour obtenir des éléments de forme et dimension désirées.

4. Procédé selon l'une quelconque des revendications 1 à 3, caractérisé en ce qu'il comprend une étape préalable de compactage du matériau sous forme de poudre, pour lui donner une forme appropriée autoportable et pour lui donner une résistivité convenable permettant l'opération ultérieure de fusion par induction.

5. Procédé selon la revendication 4, caractérisé en ce que le compactage est réalisé en comprimant un mélange de poudre du matériau, puis en chauffant le mélange à une température élevée adéquate pour obtenir un frittage donnant une cohésion suffisante et une résistivité convenable.

6. Procédé selon la revendication 4, caractérisé en ce que le compactage est réalisé en comprimant un mélange de poudre du matériau selon une pression suffisamment élevée pour lui donner une cohésion suffisante et une résistivité adaptée.

7. Procédé selon la revendication 4, caractérisé en ce que le compactage est réalisé en comprimant un mélange de poudre du matériau avec un liant.

8. Procédé selon la revendication 4, caractérisé en ce que le compactage est réalisé en extrudant, avec ou sans fil d'âme, un mélange de poudre avec un liant.

9. Procédé selon l'une quelconque des revendications 7 à 8, caractérisé en ce que le liant est susceptible de s'éliminer à haute température.

10. Procédé selon l'une quelconque des revendications 7 à 9, caractérisé en ce que le liant est en solution dans un solvant volatil, et en ce qu'après compactage on élimine au moins partiellement le solvant par séchage.

11. Procédé selon l'une quelconque des revendications 6 à 10, caractérisé en ce que le compactage comprend une opération ultérieure au cours de laquelle on chauffe le mélange à une température élevée adéquate pour obtenir un frittage donnant une cohésion suffisante et une résistivité adaptée.

12. Procédé selon la revendication 9, caractérisé en ce que le liant est un polysaccharide.

13. Procédé selon la revendication 12, caractérisé en ce que le liant est un galactomannose.

14. Procédé selon la revendication 9, caractérisé en ce que le liant est une carboxylméthylcellulose, ou l'hydroxyéthylméthylcellulose, ou un alginate.

15. Procédé selon l'une des revendications 7, 8, 9, 12, 13 ou 14, caractérisé en ce que le liant est présent dans le mélange dans une proportion comprise entre 0,5 et 2,5 % en poids de mélange sec.

16. Dispositif pour la mise en oeuvre d'un procédé selon l'une quelconque des revendications 1 à 15, comprenant un creuset (1) froid formé d'un cylindre de cuivre (2) découpé en secteurs selon des plans radiaux et refroidi par un fluide parcourant des canalisations (4), le cylindre comportant un fond (6) et une ouverture supérieure (5) pour l'introduction des matériaux à fondre, caractérisé en ce que le fond (6) du creuset est percé d'un orifice inférieur (7) de section inférieure à la section du matériau à fondre et ouvert en permanence, de sorte que le matériau à fondre peut s'écouler librement après fusion par l'orifice inférieur (7).

17. Dispositif selon la revendication 16, caractérisé en ce que le fond (6) du creuset froid est une paroi à face intérieure arrondie et concave, avantageusement sensiblement sphérique, de sorte que le matériau à fondre encore solide peut reposer librement sur le fond du creuset.

18. Dispositif selon la revendication 17, caractérisé en ce que le diamètre de l'orifice inférieur (7) du creuset est d'environ 10 millimètres.

19. Dispositif selon l'une quelconque des revendications 16 à 18, caractérisé en ce qu'il comprend, en sortie du creuset, un cylindre (9) en cuivre massif entraîné mécaniquement en rotation par des moyens moteurs et sur lequel coule le matériau fondu sortant de l'orifice inférieur (7) du creuset, pour diviser le flux de matériau et former des éléments (10) de forme et dimensions désirées.

## Claims

1. Process for producing elements of refractory material by fusion from powdered refractory material, in which the refractory material in the form of compacted powder is introduced into a crucible (1) through a top opening (5) and is heated in the crucible (1) to a temperature above its melting point, so that the molten material runs out through an orifice (7) in the bottom (6) of the crucible, characterized in that, for the fusion stage :

    – the crucible is a "cold crucible" whose copper walls are such that they transmit and concentrate the magnetic field without undergoing significant temperature rise due to induced currents, the crucible being provided with the said bottom orifice (7),

    – the powder material placed in the "cold crucible" is in self-supporting compacted form,

    – the powder material placed in the "cold crucible" has a cross-section greater than the cross-section of the bottom orifice of the crucible,

    – the powder material placed in the "cold crucible" is in compacted form having an electrical resistivity below a predetermined maximum resistivity (P), the maximum resistivity (P) being such that, at the frequency used for heating the material by induction, the skin thickness in the material is equal to half the mean radius of the fragments of material,
- the material is directly heated by induction in the "cold crucible",
- the molten material is allowed to run out continuously through the bottom orifice (7).

2. Process according to claim 1, characterized in that :
- the compacted material is in the form of fragments with a cross-section greater than the cross-section of the bottom orifice (7) of the crucible,
- the fragmented compacted material rests freely on the bottom of the crucible during the fusion operation,
- the bottom (6) of the crucible is a thick wall with an internal surface which is rounded and concave, and advantageously substantially spherical.

3. Process according to one of claims 1 or 2, characterized in that at the outlet from the bottom orifice (7) the flow of molten material is divided by being made to fall on a rotating solid copper cylinder to yield elements of the desired shape and size.

4. Process according to any one of claims 1 to 3, characterized in that it comprises a preliminary stage of compacting material in the form of powder to give it an appropriate self-supporting shape and a suitable resistivity permitting the subsequent operation of fusion by induction.

5. Process according to claim 4, characterized in that the compacting is performed by compressing a material powder mixture and then by heating the mixture to a sufficiently high temperature to cause sintering yielding sufficient cohesion and suitable resistivity.

6. Process according to claim 4, characterized in that the compacting is performed by compressing a material powder mixture to a sufficiently high pressure to give it sufficient cohesion and suitable resistivity.

7. Process according to claim 4, characterized in that the compacting is performed by compressing a material powder mixture with a binder.

8. Process according to claim 4, characterized in that the compacting is performed by extruding, with or without core wire, a powder mixture with a binder.

9. Process according to any one of claims 7 to 8, characterized in that the binder is eliminated at high temperature.

10. Process according to any one of claims 7 to 9, characterized in that the binder is in solution in a volatile solvent, and in that the solvent is at least partly eliminated after compacting, by drying.

11. Process according to any one of claims 6 to 10, characterized in that the compacting comprises a subsequent operation in which the mixture is heated to a sufficiently high temperature to cause sintering yielding sufficient cohesion and suitable resistivity.

12. Process according to claim 9, characterized in that the binder is a polysaccharide.

13. Process according to claim 12, characterized in that the binder is a galactomannose.

14. Process according to claim 9, characterized in that the binder is a carboxymethylcellulose, or hydroxyethylmethylcellulose, or an alginate.

15. Process according to one of claims 7, 8, 9, 12, 13 or 14, characterized in that the binder is present in the mixture in a proportion of between 0.5 and 2.5% by weight of dry mixture.

16. Device for carrying out a process according to any one of claims 1 to 15, comprising a cold crucible (1) formed by a copper cylinder (2) divided into sectors on radial planes and cooled by a fluid passing through ducts (4), the cylinder having a bottom (6) and a top opening (5) for the insertion of the materials to be fused, characterized in that the bottom (6) of the crucible has an orifice (7) with a cross-section smaller than the cross-section of the material to be fused, and permanently open, so that the material is able to run out freely, after melting, through the orifice (7).

17. Device according to claim 16, characterized in that the bottom (6) of the cold crucible is a wall with an internal surface which is rounded and concave, and advantageously substantially spherical so that the material for fusing, while still solid, is able to rest freely on the bottom of the crucible.

18. Device according to claim 17, characterized in that the diameter of the bottom orifice (7) of the crucible is approximately 10 millimetres.

19. Device according to any one of claims 16 to 18, characterized in that it comprises, at the outlet from the crucible, a solid copper cylinder (9) mechanically driven in rotation by driving means and onto which the molten material flows on emerging from the bottom orifice (7) of the crucible, to divide the flow of material and form elements (10) of the desired shape and size.

**Patentansprüche**

1. Verfahren zur Herstellung von Elementen aus hitzebeständigem Material durch Schmelzen, ausgehend von pulverförmigem hitzebeständigen Material, bei dem das hitzebeständige Material in Form von verdichtetem Pulver durch eine obere Öffnung (5) in einen Tiegel (1) eingebracht wird und in dem Tiegel (1) bis zum Erreichen einer Temperatur erhitzt wird, die oberhalb seines Schmelzpunktes liegt, wobei das geschmolzene Material durch eine im Boden (6) des Tiegels vorgesehene untere Öffnung (7) abfließt, dadurch gekennzeichnet, daß beim Schmelzvorgang :
- der Tiegel ein "kalter Tiegel" ist, dessen Wände aus Kupfer derart ausgebildet sind, daß sie das Magnetfeld übertragen und konzentrieren, ohne eine beträchtliche Erwärmung durch Induktionsströme zu erfahren, wobei der Tiegel mit der unteren Öffnung (7) versehen ist,

– das in den "kalten Tiegel" eingebrachte pulverförmige Material in verdichteter selbsttragbarer Form vorliegt.

– das in den "kalten Tiegel" eingebrachte pulverförmige Material einen Querschnitt aufweist, der größer als der Querschnitt der unteren Öffnung des Tiegels ist,

– das in den "kalten Tiegel" eingebrachte pulverförmige Material in verdichteter Form vorliegt, die einen elektrischen spezifischen Widerstand aufweist, der unterhalb eines vorherbestimmten maximalen spezifischen Widerstandes (P) liegt, der derart gewählt ist, daß die Hautdicke im Material bei der für das Erhitzen des Materials durch Induktion verwendeten Frequenz gleich der Hälfte des mittleren Radius der Materialstücke ist,

– das Material direkt durch Induktion in dem "kalten Tiegel" erhitzt wird,

– geschmolzenes Material ständig durch die untere Öffnung (7) abgelassen wird.

2. Verfahren nach Anspruch 1, dadurch gekennzeichnet, daß :

– das verdichtete Material in Form von Stücken vorliegt, deren Querschnitt größer als der Querschnitt der unteren Öffnung (7) des Tiegels ist,

– das in Stücke verdichtete Material während des Schmelzvorganges frei auf dem Boden des Tiegels liegt,

– der Boden (6) des Tiegels eine dicke Wand mit abgerundeter und konkaver Innenfläche ist, die vorteilhafterweise im wesentlichen sphärisch ist.

3. Verfahren nach einem der Ansprüche 1 oder 2, dadurch gekennzeichnet, daß der Fluß des geschmolzenen Materials beim Austritt aus der unteren Öffnung (7) geteilt wird, indem er auf eine in Drehung befindliche Walze aus massivem Kupfer abgelassen wird, um Elemente in der gewünschten Form und Dimension zu erhalten.

4. Verfahren nach einem der Ansprüche 1 bis 3, dadurch gekennzeichnet, daß es einen vorbereitenden Arbeitsgang zum Verdichten des pulverförmigen Materials umfaßt, um ihm eine passende selbsttragbare Form und einen entsprechenden spezifischen Widerstand zu verleihen, wodurch der nächste Arbeitsgang des Schmelzens durch Induktion ermöglicht wird.

5. Verfahren nach Anspruch 4, dadurch gekennzeichnet, daß das Verdichten durch Pressen eines Pulvergemisches des Materials und nachfolgendes Erhitzen auf eine entsprechend hohe Temperatur erfolgt, um ein Sintern zu erzielen, wodurch eine ausreichende Kohäsion und ein geeigneter spezifischer Widerstand erreicht werden.

6. Verfahren nach Anspruch 4, dadurch gekennzeichnet, daß das Verdichten durch Pressen eines Pulvergemisches des Materials mit ausreichend hohem Druck erfolgt, um ihm eine ausreichende Kohäsion und einen entsprechenden spezifischen Widerstand zu verleihen.

7. Verfahren nach Anspruch 4, dadurch gekennzeichnet, daß das Verdichten durch Pressen eines Pulvergemisches des Materials mit einem Bindemittel erfolgt.

8. Verfahren nach Anspruch 4, dadurch gekennzeichnet, daß das Verdichten durch Extrudieren mit oder ohne Kernfaden eines Pulvergemisches mit einem Bindemittel erfolgt.

9. Verfahren nach einem der Ansprüche 7 oder 8, dadurch gekennzeichnet, daß das Bindemittel bei hoher Temperatur entfernt werden kann.

10. Verfahren nach einem der Ansprüche 7 bis 9, dadurch gekennzeichnet, daß das Bindemittel in einem flüchtigen Lösungsmittel gelöst ist und daß das Lösungsmittel nach dem Verdichten zumindest teilweise durch Trocknen entfernt wird.

11. Verfahren nach einem der Ansprüche 6 bis 10, dadurch gekennzeichnet, daß das Verdichten einen weiteren Vorgang umfaßt, im Verlaufe dessen das Gemisch auf eine entsprechend hohe Temperatur erhitzt wird, um ein Sintern zu erzielen, wodurch eine ausreichende Kohäsion und ein geeigneter spezifischer Widerstand erreicht werden.

12. Verfahren nach Anspruch 9, dadurch gekennzeichnet, daß das Bindemittel ein Polysaccharid ist.

13. Verfahren nach Anspruch 12, dadurch gekennzeichnet, daß das Bindemittel eine Galactomannose ist.

14. Verfahren nach Anspruch 9, dadurch gekennzeichnet, daß das Bindemittel eine Carboxymethylzellulose, oder die Hydroxyethylmethylzellulose oder ein Alginat ist.

15. Verfahren nach einem der Ansprüche 7,8,9,12,13 oder 14, dadurch gekennzeichnet, daß das Bindemittel in dem Gemisch in einem Verhältnis zwischen 0,5 und 2,5 Gewichtsprozent des trockenen Gemisches vorhanden ist.

16. Vorrichtung zur Durchführung eines Verfahrens nach einem der Ansprüche 1 bis 15, umfassend einen kalten Tiegel (1), der durch einen Zylinder (2) aus Kupfer gebildet wird, welcher entlang radialer Ebenen in Kreisausschnitte geteilt ist und mittels ein durch Rohrleitungen (4) fließendes Fluid gekühlt wird, wobei der Zylinder einen Boden (6) und eine obere Öffnung (5) zum Einbringen von zu schmelzenden Materialien aufweist, dadurch gekennzeichnet, daß der Boden (6) des Tiegels durch eine untere Öffnung (7) durchbrochen ist, deren Durchmesser unterhalb des Durchmessers des zu schmelzenden Materials liegt und ständig geöffnet ist, sodaß das zu schmelzende Material nach dem Schmelzen frei durch die untere Öffnung (7) abfließen kann.

17. Vorrichtung nach Anspruch 16, dadurch gekennzeichnet, daß der Boden (6) des kalten Tiegels eine Wand mit abgerundeter und konkaver Innenfläche ist, die vorteilhafterweise im wesentlichen sphärisch ist, sodaß das noch feste zu schmelzende Material frei am Boden des Tiegels liegen kann.

18. Vorrichtung nach Anspruch 17, dadurch gekennzeichnet, daß der Durchmesser der unteren Öffnung (7) des Tiegels etwa 10 Millimeter beträgt.

19. Vorrichtung nach einem der Ansprüche 16 bis 18, dadurch gekennzeichnet, daß sie bei der Austrittsöffnung aus dem Tiegel einen Zylinder (9) aus massivem Kupfer umfaßt, der durch Antriebsmittel mechanisch in Rotation versetzt ist und auf den das aus der unteren Öffnung (7) des Tiegels austretende geschmolzene Material abfließt, um den Materialfluß zu trennen und Elemente (10) in der gewünschten Form und Dimension zu bilden.

Fig.1